# EUROPEAN PATENT APPLICATION

(11) **EP 3 319 314 A1**
(43) Date of publication of application: **09.05.2018**
(21) Application number: 17178207.1
(22) Date of filing: 27.06.2017
(51) Int. Cl.: H04N 7/18

(54) **METHOD AND APPARATUS FOR VIDEO EDITING AND VIDEO SHOOTING**

(30) Priority: 03.11.2016 CN 201610959984
(71) Applicant: Beijing Xiaomi Mobile Software Co., Ltd., Beijing 100085 (CN)
(72) Inventor: CHEN, Tao, Beijing, 100085 (CN); LIU, Huayijun, Beijing, 100085 (CN); HAN, Jin, Beijing, 100085 (CN)
(74) Representative: Kudlek, Franz Thomas

(57) **Abstract**

A method and apparatus for video editing and video shooting are provided in embodiments of the present disclosure. The method for video editing includes obtaining (S11) a video editing parameter; and editing (S12) a video to be edited according to the video editing parameter, wherein the video to be edited is marked with altitude information during a video shooting process. In this technical solution, a video to be edited, which is marked with altitude information during a shooting process of the video, may be edited, after a video editing parameter is obtained. It avoids the need for a user to perform video editing after watching the entire video to be edited. Thereby, the efficiency of video editing may be improved and meanwhile manual operations may be reduced. Certainly, accuracy of video editing may also be improved, due to the avoidance of manual editing.

## Description

### FIELD

The present disclosure relates to a field of computer, and particularly to a method and apparatus for video editing and video shooting.

### BACKGROUND

Unmanned Aerial Vehicle (UAV) aerial photography enables us to overlook beautiful scenery from high altitude. Usually, during aerial photography, an UAV will keep shooting when taking off and landing. A video shot by the UAV during the whole process from taking off to landing usually needs to be clipped, if not the whole video is necessary. In related arts, a video is generally edited in a manner that the whole video should be watched. Therefore, efficiency of the editing needs to be improved.

### SUMMARY

A method and an apparatus for video editing and video shooting are provided in embodiments of the present disclosure.

Technical solutions employed in embodiments of the present disclosure are described as follows.

According to a first aspect of the present disclosure, a method for video editing is provided. The method includes: obtaining a video editing parameter; and editing a video to be edited according to the video editing parameter, wherein the video to be edited is marked with altitude information during a video shooting process.

In one embodiment, editing the video to be edited according to the video editing parameter includes: selecting, according to the video editing parameter, a target video which matches the video editing parameter from the video to be edited; and cutting the target video out from the video to be edited.

In one embodiment, the altitude information includes at least one of an altitude, atmospheric pressure corresponding to the altitude, an aboveground height corresponding to the altitude, a solar image corresponding to the altitude, and gravity data corresponding to the altitude.

In one embodiment, the video editing parameter includes at least one of an altitude, atmospheric pressure corresponding to the altitude, an aboveground height corresponding to the altitude, a solar image corresponding to the altitude, and gravity data corresponding to the altitude.

According to a second aspect of the present disclosure, a method for video shooting is provided. The method includes: obtaining, during a process for shooting a video, altitude information corresponding to a video shooting device; and marking the video with the altitude information to obtain a video to be edited.

In one embodiment, obtaining, during a process for shooting a video, altitude information corresponding to a video shooting device includes: obtaining, during the process for shooting the video, the altitude information corresponding to the video shooting device in real time; or obtaining, during the process for shooting the video, the altitude information corresponding to the video shooting device according to a preset time interval.

In one embodiment, after obtaining the video to be edited, the method further includes: uploading the video to be edited to a database; or storing the video to be edited locally.

In one embodiment, uploading the video to be edited to the database includes: uploading the video to be edited to the database when a user corresponding to the video to be edited has permission for uploading; or uploading the video to be edited to the database according to an instruction from a terminal device.

In one embodiment, the altitude information includes at least one of an altitude, atmospheric pressure corresponding to the altitude, an aboveground height corresponding to the altitude, a solar image corresponding to the altitude, and gravity data corresponding to the altitude.

In one embodiment, obtaining, during the process for shooting the video, altitude information corresponding to the video shooting device, when the altitude information includes the altitude, includes: obtaining an altitude corresponding to the video shooting device by a positioning system; or obtaining the altitude corresponding to the video shooting device according to collected atmospheric pressure; or obtaining the altitude corresponding to the video shooting device according to a collected solar image; or obtaining the altitude corresponding to the video shooting device according to collected gravity data.

According to a third aspect of the present disclosure, an apparatus for video editing is provided. The apparatus includes: an obtaining module, configured to obtain a video editing parameter; and an editing module, configured to edit a video to be edited according to the video editing parameter, wherein the video to be edited is marked with altitude information during a video shooting process.

In one embodiment, the editing module includes: a selection sub-module, configured to select, according to the video editing parameter, a target video which matches the video editing parameter from the video to be edited; and a cutting-out sub-module, configured to cut the target video out from the video to be edited.

In one embodiment, the altitude information includes at least one of an altitude, atmospheric pressure corresponding to the altitude, an aboveground height corresponding to the altitude, a solar image corresponding to the altitude, and gravity data corresponding to the altitude.

In one embodiment, the video editing parameter includes at least one of an altitude, atmospheric pressure corresponding to the altitude, an aboveground height corresponding to the altitude, a solar image corresponding to the altitude, and gravity data corresponding to the altitude.

According to a forth aspect of the present disclosure, an apparatus for video shooting is provided. The apparatus includes: an obtaining module, configured to obtain, during a process for shooting a video, altitude information corresponding to a video shooting device; and a marking module, configured to mark the video with the altitude information to obtain a video to be edited.

In one embodiment, a first obtaining sub-module, configured to obtain, during the process for shooting the video, the altitude information corresponding to the video shooting device in real time; or a second obtaining sub-module, configured to obtain, during the process for shooting the video, the altitude information corresponding to the video shooting device according to a preset time interval, is provided

In one embodiment, the apparatus further includes uploading the video to be edited to a database; or storing the video to be edited locally.

In one embodiment, the uploading module includes a first uploading sub-module, configured to upload the video to be edited to the database when a user corresponding to the video to be edited has permission for uploading; or a second uploading sub-module, configured to upload the video to be edited to the database according to an instruction from a terminal device.

In one embodiment, the altitude information includes at least one of an altitude, atmospheric pressure corresponding to the altitude, an aboveground height corresponding to the altitude, a solar image corresponding to the altitude, and gravity data corresponding to the altitude.

In one embodiment, the obtaining module includes a third obtaining sub-module, configured to obtain an altitude corresponding to the video shooting device by a positioning system, when the altitude information includes the altitude; or a forth obtaining sub-module, configured to obtain the altitude corresponding to the video shooting device according to collected atmospheric pressure, when the altitude information includes the altitude; or a fifth obtaining sub-module, configured to obtain the altitude corresponding to the video shooting device according to a collected solar image, when the altitude information includes the altitude; or a sixth obtaining sub-module, configured to obtain the altitude corresponding to the video shooting device according to collected gravity data, when the altitude information includes the altitude.

According to a fifth aspect of the present disclosure, an apparatus for video editing is provided. The apparatus includes a processor and a memory for storing instructions executable by the processor. The processor is configured to obtain a video editing parameter; and edit a video to be edited according to the video editing parameter, wherein the video to be edited is marked with altitude information during a video shooting process.

According to a sixth aspect of the present disclosure, an apparatus for video shooting is provided. The apparatus includes a processor and a memory for storing instructions executable by the processor. The processor is configured to obtain, during a process for shooting a video, altitude information corresponding to a video shooting device; and mark the video with the altitude information to obtain a video to be edited.

Technical solutions provided by embodiments of the present disclosure may achieve the following beneficial effects.

A video to be edited, which is marked with altitude information during a shooting process of the video, may be edited, after a video editing parameter is obtained. It avoids the need for a user to perform video editing after watching the entire video to be edited. Thereby, the efficiency of video editing may be improved and meanwhile manual operations may be reduced. Advantageously, accuracy of video editing may also be improved, due to the avoidance of manual editing.

It is to be understood that both the foregoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart illustrating a method for video editing according to an exemplary embodiment.
Fig. 2 is a flow chart illustrating another method for video editing according to an exemplary embodiment.
Fig. 3 is a flow chart illustrating a method for video shooting according to an exemplary embodiment.
Fig. 4A is a flow chart illustrating another method for video shooting according to an exemplary embodiment.
Fig. 4B is a flow chart illustrating another method for video shooting according to an exemplary embodiment.
Fig. 5 is a schematic diagram illustrating a method for video editing according to an exemplary embodiment.
Fig. 6 is a block diagram illustrating an apparatus for video editing according to an exemplary embodiment.
Fig. 7 is a block diagram illustrating another apparatus for video editing according to an exemplary embodiment.
Fig. 8 is a block diagram illustrating an apparatus for video shooting according to an exemplary embodiment.
Fig. 9A is a block diagram illustrating another apparatus for video shooting according to an exemplary embodiment.
Fig. 9B is a block diagram illustrating another apparatus for video shooting according to an exemplary embodiment.
Fig. 10A is a block diagram illustrating another apparatus for video shooting according to an exemplary embodiment.
Fig. 10B is a block diagram illustrating another apparatus for video shooting according to an exemplary embodiment.
Fig. 11A is a block diagram illustrating another apparatus for video shooting according to an exemplary embodiment.
Fig. 11B is a block diagram illustrating another apparatus for video shooting according to an exemplary embodiment.
Fig. 12 is a block diagram appropriate for an apparatus for video editing or an apparatus for video shooting according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the disclosure. Instead, they are merely examples consistent with aspects related to the disclosure as recited in the appended claims.

Unmanned Aerial Vehicle (UAV) aerial photography enables us to overlook beautiful scenery from high altitude. Usually, during aerial photography, an UAV will keep shooting when taking off and landing. A video shot by the UAV during the whole process from taking off to landing usually needs to be clipped, if not the whole video is necessary. In related arts, a video is generally edited in a manner that the whole video should be watched. In the present disclosure, a video shot by an UAV is marked with altitude information such as an altitude, atmospheric pressure, an aboveground height, a location and the like, and the video is edited by selecting a video editing parameter. Thereby, the present disclosure reduces the difficulty in editing a video shot with an UAV, and enhances user experience.

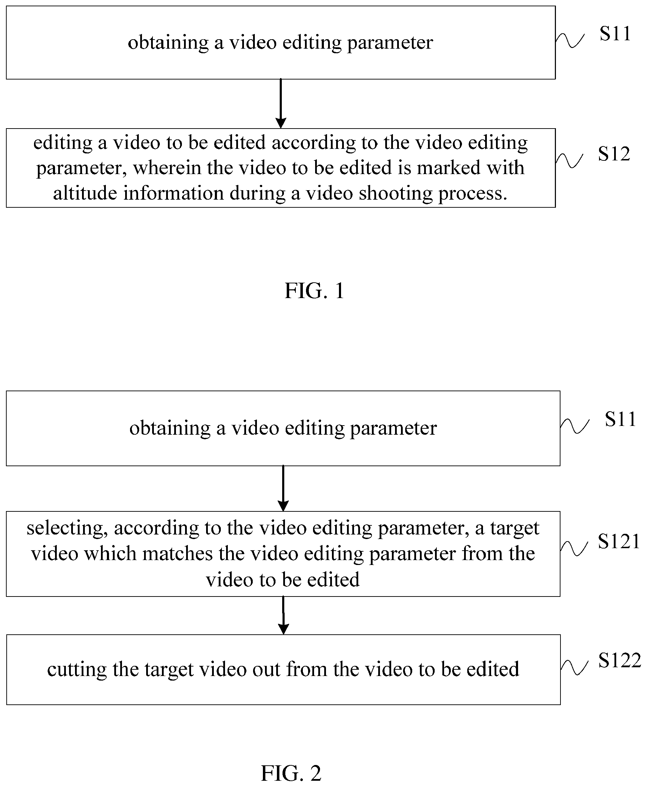

Fig. 1 is a flow chart illustrating a method for video editing according to an exemplary embodiment. The method may be applied to a device with a video editing function (e.g., a phone, a tablet, a player and the like) or an application program thereof. As shown in Fig. 1, the method includes step S11 and step S12.

In S11, a video editing parameter is obtained.

The video editing parameter may include at least one of an altitude, atmospheric pressure corresponding to the altitude, an aboveground height corresponding to the altitude, a solar image corresponding to the altitude, and gravity data corresponding to the altitude.

In S 12, a video to be edited is edited according to the video editing parameter, wherein the video to be edited is marked with altitude information during a video shooting process. The video to be edited may be stored in a database. The altitude information may be embedded in a set field in the video to be edited. The video to be edited is a video that needs to be edited after it is marked during a shooting process of the video, according to altitude information corresponding to a device which is shooting the video.

In the above-described method of embodiments of the present disclosure, a video to be edited, which is marked with altitude information during a shooting process of the video, may be edited, after a video editing parameter is obtained. It avoids the need for a user to perform video editing after watching the entire video to be edited. Thereby, the efficiency of video editing may be improved and meanwhile manual operations may be reduced. Certainly, accuracy of video editing may also be improved, due to the avoidance of manual editing.

Furthermore, the altitude information may also include at least one of an altitude, atmospheric pressure corresponding to the altitude, an aboveground height corresponding to the altitude, a solar image corresponding to the altitude, and gravity data corresponding to the altitude.

Fig. 2 is a flow chart illustrating another method for video editing according to an exemplary embodiment.

As shown in Fig. 2, in one embodiment, the above-described step S12 (i.e., "editing a video to be edited according to the video editing parameter, wherein the video to be edited is marked with altitude information during a video shooting process") may include step S121 and step S 122.

In S121, according to the video editing parameter, a target video which matches the video editing parameter is selected from the video to be edited.

In embodiments of the present disclosure, the video editing parameter may be a parameter entered by a user, or a parameter automatically determined according to user's habits of editing. For example, if a user preferred to use the aboveground height as the video editing parameter previously, the aboveground height may be automatically regarded as the video editing parameter; and historical aboveground heights, each of which has been used as the video editing parameter during a preset historical period, may also be obtained, and a common range of aboveground height may then be calculated automatically according to the historical aboveground heights (e.g., according to the historical aboveground heights, a mean value of the historical aboveground heights may be calculated, and then the mean value of the historical aboveground heights may be regarded as the common range of aboveground height for selecting the target video); and then a target video which the user desires to cut out is selected from the video to be edited, according to the range of aboveground height.

In S122, the target video is cut out from the video to be edited.

According to the video editing parameter, the target video which matches the video editing parameter may be automatically selected from the video to be edited, and then the target video may be cut out automatically. In this manner, the target video desired by the user may be cut out quickly and efficiently according to the video editing parameter.

As another example, when the altitude information includes the altitude and the video to be edited is marked with altitudes from the beginning to the end of the shooting process of the video, the video editing parameter may be a range of altitude. Thereby, according to the range of altitude, the target video corresponding to the range of altitude may be cut out from the video to be edited marked with the altitudes.

In one embodiment, the altitude information may include at least one of an altitude, atmospheric pressure corresponding to the altitude, an aboveground height corresponding to the altitude, a solar image corresponding to the altitude, and gravity data corresponding to the altitude.

The altitude information marked in the video may include various types of information. Therefore, different types of information may be used to mark the video, which enriches manners for marking a video and lays a foundation for later editing the video with different editing parameters.

In the method described above in embodiments of the present disclosure, the video is marked by embedding the altitude information during a process for shooting the video, in order to improve the efficiency of later video editing.

In one embodiment, the video editing parameter may include at least one of an altitude, atmospheric pressure corresponding to the altitude, an aboveground height corresponding to the altitude, a solar image corresponding to the altitude, and gravity data corresponding to the altitude.

The video editing parameter may include one or more parameters mentioned above, which enriches manners for marking a video and improves the efficiency of video editing. When multiple editing parameters are used to edit the video to be edited, the accuracy of video editing may be improved, so that the edited target video may be more in line with editing requirements of user.

Certainly, the parameter type of the video editing parameter may be the same as or different from the information type of the altitude information. For example, when the altitude information includes the altitude, the video editing parameter may be the altitude, or the video editing parameter may be at least one of the atmospheric pressure corresponding to the altitude, aboveground height corresponding to the altitude, the solar image corresponding to the altitude, and the gravity data corresponding to the altitude. In this case, the video editing process may still be completed, in which, during editing, the parameter type of the used video editing parameter should be firstly converted into a parameter of the same type as the information type of the altitude information. For example, if the used editing parameter is a range of atmospheric pressure, it should be converted into a range of altitude during editing of the video to be edited.

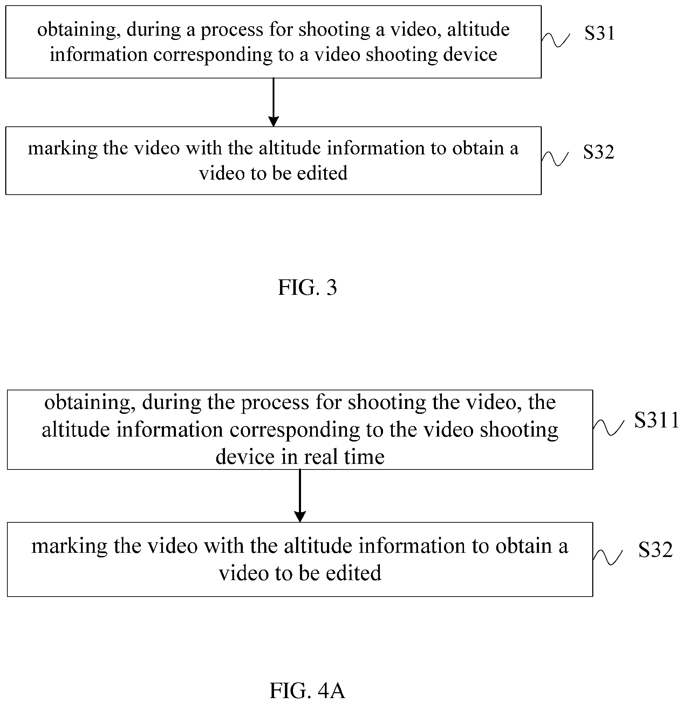

Fig. 3 is a flow chart illustrating a method for video shooting according to an exemplary embodiment. The method may be applied to a device with a video editing function (e.g. a phone, a tablet, a recorder, an UAV and the like) or an application program thereof. As shown in Fig. 3, the method may include step S31 and step S32.

In S31, during a process for shooting a video, altitude information corresponding to a video shooting device is obtained.

In embodiments of the present disclosure, the video shooting device is a device for shooting the video. Furthermore, when the altitude information is obtained, the altitude information corresponding to the shooting device may be obtained according to a preset time interval (e.g. 2 seconds), or a preset number of frames (the preset number of frames may be set in advance, for example, it may be 20 frames), or the altitude information corresponding to the shooting device may also be obtained in real time.

In S32, the video is marked with the altitude information to obtain a video to be edited.

In embodiments of the present disclosure, when the altitude information is used to mark the video, the altitude information may be marked at a position in frames of the video corresponding to the altitude information, so as to correspond to the frames of the video. In this way, the marked altitude information may accurately represent the altitude information of the shooting device when shooting the frames of the video. However, the altitude information may be specifically located in a particular field or a starting part or other parts of the frames of the video, which is not limited in embodiments of the present disclosure.

In the above-described method in embodiments of the present disclosure, during a video process for shooting a video, altitude information corresponding to a video shooting device is obtained, and then the altitude information may be embedded in the video to mark the video with the altitude information, to obtain a video to be edited which includes the altitude information, and then the video to be edited may be edited automatically according to the video editing parameter. Therefore, this method enriches manners for video editing and meanwhile improves efficiency and accuracy of video editing.

Fig. 4A is a flow chart illustrating another method for video shooting according to an exemplary embodiment.

As shown in Fig. 4A, in one embodiment, the above-described step S31 (i.e., "obtaining, during a process for shooting a video, altitude information corresponding to a video shooting device") may include step S311.

In S311, during the process for shooting the video, the altitude information corresponding to the video shooting device is obtained in real time.

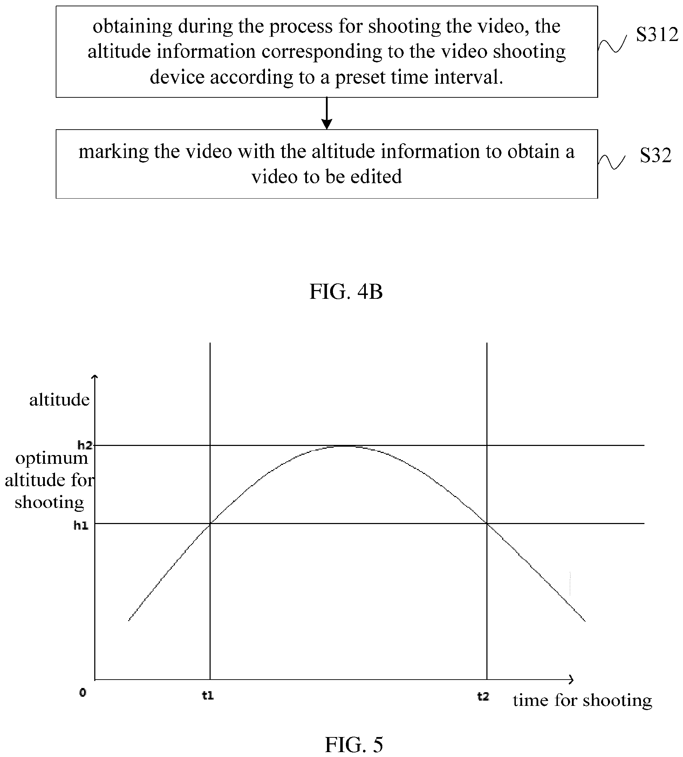

Alternatively, Fig. 4B is a flow chart illustrating another method for video shooting according to an exemplary embodiment.

As shown in Fig. 4B, in one embodiment, the above-described step S31 (i.e., "obtaining, during a process for shooting a video, altitude information corresponding to a video shooting device") may further include step S312.

In S312, during the process for shooting the video, the altitude information corresponding to the video shooting device is obtained according to a preset time interval.

In the above-described method in embodiments of the present disclosure, the altitude information corresponding to the video shooting device is obtained in real time, or according to a preset time interval, and then the altitude information may be embedded in frames of the video corresponding to the altitude information (wherein , the frames of the video are several frames of the video which are shot when the shooting device is at an altitude corresponding to the altitude information), to obtain a video to be edited which includes the altitude information, in order that the video to be edited may be edited according to a video editing parameter equivalent to the altitude information.

In one embodiment, the altitude information may include at least one of an altitude, atmospheric pressure corresponding to the altitude, an aboveground height corresponding to the altitude, a solar image corresponding to the altitude, and gravity data corresponding to the altitude.

The altitude information includes one or more items of the information mentioned above. Therefore, different types of information may be used to mark the video, which enriches manners for marking a video and lays a foundation for later editing the video with different editing parameters.

In one embodiment, after obtaining the video to be edited as mentioned above, the method may further include uploading the video to be edited to a database, or storing the video to be edited locally.

In the above-described method in embodiments of the present disclosure, a video to be edited which is marked with altitude information is stored. A database is established, such that a video may be retrieved in the database based on a video editing parameter.

In one embodiment, when the video to be edited is uploaded to the database as described above, permission for uploading of a user corresponding to the video to be edited may be validated. The video to be edited may be uploaded to the database when the user corresponding to the video to be edited has permission for uploading.

In one embodiment, when the video to be edited is uploaded to the database as described above, the video to be edited may be uploaded to the database according to an instruction from a terminal device.

The instruction from a terminal device may be triggered by an operation of a user, for example, when the user clicks an option for uploading, the instruction for uploading the video to be edited may be generated, or when the user input a sliding trace for uploading the video to be edited, the instruction for uploading the video to be edited may also be generated.

In the above method described in embodiments of the present disclosure, a video embedded with altitude information may be uploaded to a database after the permission is validated or the instruction is received.

In one embodiment, when the altitude information includes the altitude, the step S31as described in Fig.3 (i.e., "obtaining, during a process for shooting a video, altitude information corresponding to a video shooting device"), may be implemented by at least one of the following manners.

The altitude corresponding to the video shooting device may be obtained by a positioning system, for example, the altitude of a location where the shooting device is currently located, may be identified by the Global Positioning System (GPS) (for example, when the operation is performed by an UAV, the altitude refers to an altitude of a flight region where the UAV is currently located).

Alternatively, the altitude corresponding to the video shooting device may be obtained according to collected atmospheric pressure, for example, the atmospheric pressure of a location where the shooting device is currently located, may be collected by a atmospheric pressure sensor or a atmospheric pressure gauge (for example, when the operation is performed by an UAV, the atmospheric pressure refers to atmospheric pressure of a flight region where the UAV is currently located). The altitude may be obtained according to the atmospheric pressure.

Alternatively, the altitude corresponding to the video shooting device may be obtained according to a collected solar image, for example, the solar image may be captured by a camera on the shooting device, and then the altitude may be obtained according to the solar image. For example, the altitude may be obtained according to the color of the sun, and the position and size of the sun shown in the solar image in the corresponding frames of the video.

Alternatively, the altitude corresponding to the video shooting device may be obtained according to collected gravity data, for example, gravity acceleration may be collected by a gravity sensor. The altitude corresponding to the video shooting device may be obtained according to the gravity acceleration.

In the above method described in embodiments of the present disclosure, altitude information including altitudes may be embedded in the video. As a result, the video may be edited according to the altitudes, which enhances user experience.

Certainly, in the above method described in embodiments of the present disclosure, the altitude information embedded in the video may be the atmospheric pressure, aboveground height, solar image, and gravity data corresponding to the altitude directly obtained according to the above manners. Hence, a convention step for converting the information to the altitude may be reduced, and the video to be edited may also be edited according to video editing parameters corresponding to the atmospheric pressure, aboveground height, solar image, gravity data and the like, so as to enhance user experience. The aboveground height may be converted from gravity data obtained by a gravity acceleration sensor installed on the shooting device, or the atmospheric pressure obtained by a atmospheric pressure gauge installed on the shooting device.

Certainly, the altitude information is not limited to the information mentioned above, and it may further include location information corresponding to the shooting device, which may be obtained by a positioning system.

Fig. 5 is an example for video editing according to an exemplary embodiment. In Fig. 5, the vertical axis represents altitudes, while the horizontal axis represents duration of a video. As shown in Fig. 5, a range of altitude for editing, which may be used as a video editing parameter, is above h1 (i.e. altitudes between h1 and h2 are optimum altitudes for shooting). In this case, when the step S12 is performed, a section of target video which matches the altitude range for editing from h1 to h2 may be automatically selected and cut out from the video corresponding to altitudes included in the curve. Therefore, a section of the video corresponding to a part of the altitude curve below h1 may be cut off, that is to say, two sections of the video respectively corresponding to a part of the altitude curve before t1 and another part of the altitude curve after t2 may be cut off, while the target video corresponding to a period between t1 and t2 (i.e. the target video corresponding to the optimum altitudes for shooting) may remain.

The altitude is merely an example in this embodiment, and in other similar embodiments, the video may be also edited according to the atmospheric pressure, aboveground height, solar image, gravity data, location information and the like. For example, a video to be edited may be edited according to a range of atmospheric pressure for editing; a video to be edited may be edited according to a range of aboveground height for editing; and a video to be edited may be edited according to a range of location information for editing.

Certainly, the above embodiments may be implemented individually or in combination with each other.

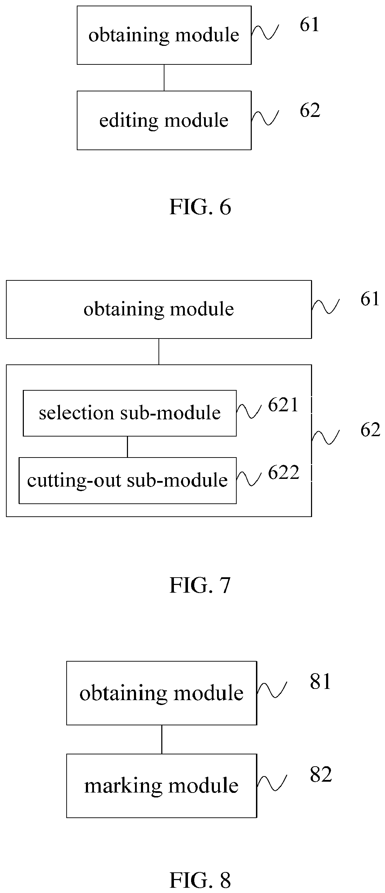

Fig. 6 is a block diagram illustrating an apparatus for video editing according to an exemplary embodiment.

Corresponding to the above method for video editing provided by embodiments of the present disclosure, an apparatus for video editing is also provided by embodiments of the present disclosure. As shown in Fig. 6, the apparatus includes an obtaining module 61 and an editing module 62.

The obtaining module 61 is configured to obtain a video editing parameter.

The editing module 62 is configured to edit a video to be edited according to the video editing parameter. The video to be edited is marked with altitude information during a video shooting process.

Fig. 7 is a block diagram illustrating another apparatus for video editing according to an exemplary embodiment.

As shown in Fig. 7, the editing module 62 as shown in Fig. 6 may include a selection sub-module 621 and a cutting-out sub-module 622.

The selection sub-module 621 is configured to select, according to the video editing parameter, a target video which matches the video editing parameter from the video to be edited.

The cutting-out sub-module 622 is configured to cut the target video out from the video to be edited.

In one embodiment, the altitude information may include at least one of an altitude, atmospheric pressure corresponding to the altitude, an aboveground height corresponding to the altitude, a solar image corresponding to the altitude, and gravity data corresponding to the altitude.

In one embodiment, the video editing parameter may include at least one of an altitude, atmospheric pressure corresponding to the altitude, an aboveground height corresponding to the altitude, a solar image corresponding to the altitude, and gravity data corresponding to the altitude.

Fig. 8 is a block diagram illustrating an apparatus for video shooting according to an exemplary embodiment.

Corresponding to the above method for video shooting provided by embodiments of the present disclosure, an apparatus for video shooting is also provided by embodiments of the present disclosure. As shown in Fig. 8, the apparatus includes an obtaining module 81 and a marking module 82.

The obtaining module 81 is configured to obtain, during a process for shooting a video, altitude information corresponding to a video shooting device.

The marking module 82 is configured to mark the video with the altitude information to obtain a video to be edited.

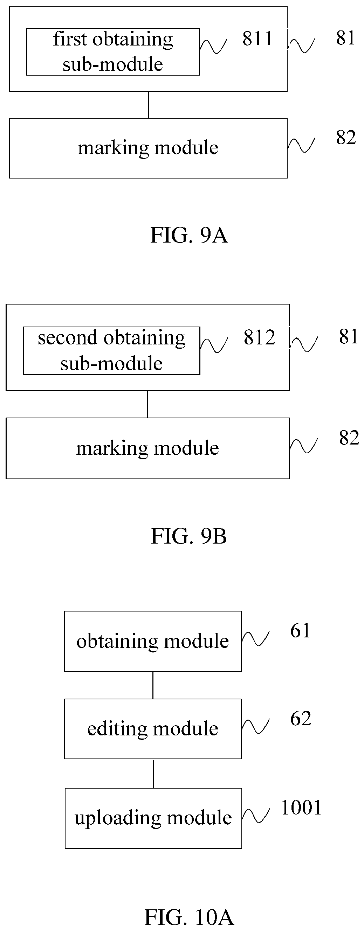

Fig. 9A is a block diagram illustrating another apparatus for video shooting according to an exemplary embodiment.

As shown in Fig. 9A, the obtaining module 81 as shown in Fig. 8 may include a first obtaining sub-module 811.

The first obtaining sub-module 811 is configured to obtain, during the process for shooting the video, the altitude information corresponding to the video shooting device in real time.

Alternatively, Fig. 9B is a block diagram illustrating another apparatus for video shooting according to an exemplary embodiment.

As shown in Fig. 9B, the obtaining module 81 as shown in Fig. 8 may include a second obtaining sub-module 812.

The second obtaining sub-module 812 is configured to obtain, during the process for shooting the video, the altitude information corresponding to the video shooting device according to a preset time interval.

Fig. 10A is a block diagram illustrating another apparatus for video shooting according to an exemplary embodiment.

As shown in Fig. 10A, the apparatus as shown in Fig. 6 may further include an uploading module 1001.

The uploading module 1001 is configured to upload the video to be edited to a database after the video to be edited is obtained.

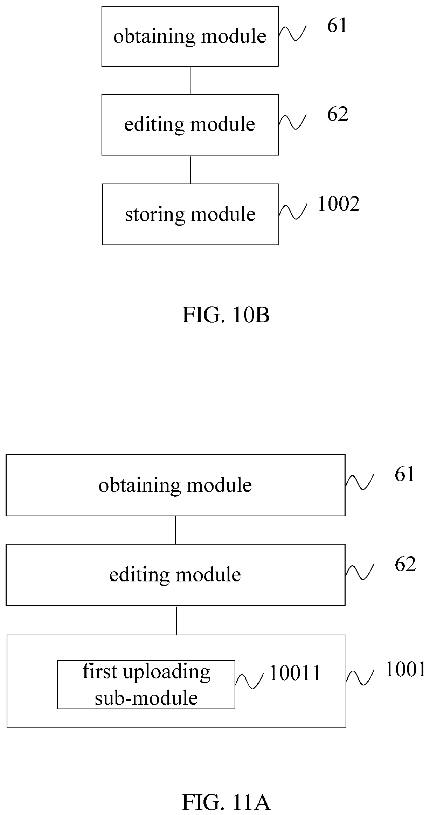

Alternatively, Fig. 10B is a block diagram illustrating another apparatus for video shooting according to an exemplary embodiment.

As shown in Fig. 10B, the apparatus as shown in Fig. 6 may further include a storing module 1002.

The storing module 1002 is configured to store the video to be edited locally.

Fig. 11A is a block diagram illustrating another apparatus for video shooting according to an exemplary embodiment.

As shown in Fig. 11A, in one embodiment, the uploading module 1001 as shown in Fig. 10A may include a first uploading sub-module 10011, which is configured to upload the video to be edited to the database when a user corresponding to the video to be edited has permission for uploading.

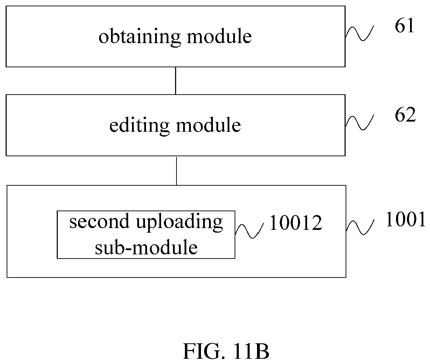

Alternatively, Fig. 11B is a block diagram illustrating another apparatus for video shooting according to an exemplary embodiment.

As shown in Fig. 11B, in one embodiment, the uploading module 1001 as shown in Fig. 10A may include a second uploading sub-module 10012, which is configured to upload the video to be edited to the database according to an instruction from a terminal device.

In one embodiment, the altitude information may include at least one of an altitude, atmospheric pressure corresponding to the altitude, an aboveground height corresponding to the altitude, a solar image corresponding to the altitude, and gravity data corresponding to the altitude.

In one embodiment, the obtaining module 61 as shown in Fig. 6 may include a third obtaining sub-module, a forth obtaining sub-module, a fifth obtaining sub-module or a sixth obtaining sub-module.

The third obtaining sub-module is configured to obtain an altitude corresponding to the video shooting device by a positioning system, when the altitude information includes the altitude.

The forth obtaining sub-module is configured to obtain the altitude corresponding to the video shooting device according to collected atmospheric pressure, when the altitude information includes the altitude.

The fifth obtaining sub-module is configured to obtain the altitude corresponding to the video shooting device according to a collected solar image, when the altitude information includes the altitude.

The sixth obtaining sub-module is configured to obtain the altitude corresponding to the video shooting device according to collected gravity data, when the altitude information includes the altitude.

According to a fifth aspect of embodiments of the present disclosure, an apparatus for video editing is provided. The apparatus includes a processor and a memory for storing instructions executable by the processor. The processor is configured to obtain a video editing parameter; and edit a video to be edited according to the video editing parameter, wherein the video to be edited is marked with altitude information during a video shooting process.

In one embodiment, editing the video to be edited according to the video editing parameter may include selecting, according to the video editing parameter, a target video which matches the video editing parameter from the video to be edited; and cutting the target video out from the video to be edited.

In one embodiment, the altitude information may include at least one of an altitude, atmospheric pressure corresponding to the altitude, an aboveground height corresponding to the altitude, a solar image corresponding to the altitude, and gravity data corresponding to the altitude.

In one embodiment, the video editing parameter may include at least one of an altitude, atmospheric pressure corresponding to the altitude, an aboveground height corresponding to the altitude, a solar image corresponding to the altitude, and gravity data corresponding to the altitude.

According to a sixth aspect of the embodiment of the present disclosure, an apparatus for video shooting is provided. The apparatus includes a processor and a memory for storing instructions executable by the processor. The processor is configured to obtain, during a process for shooting a video, altitude information corresponding to a video shooting device; and mark the video with the altitude information to obtain a video to be edited.

In one embodiment, obtaining, during a process for shooting a video, altitude information corresponding to a video shooting device may include obtaining, during the process for shooting the video, the altitude information corresponding to the video shooting device in real time; or obtaining, during the process for shooting the video, the altitude information corresponding to the video shooting device according to a preset time interval.

In one embodiment, after obtaining the video to be edited, the processor may be further configured to upload the video to be edited to a database; or store the video to be edited locally.

In one embodiment, uploading the video to be edited to the database may include uploading the video to be edited to the database when a user corresponding to the video to be edited has permission for uploading; or uploading the video to be edited to the database according to an instruction from a terminal device.

In one embodiment, the altitude information may include at least one of an altitude, atmospheric pressure corresponding to the altitude, an aboveground height corresponding to the altitude, a solar image corresponding to the altitude, and gravity data corresponding to the altitude.

In one embodiment, obtaining, during the process for shooting the video, altitude information corresponding to the video shooting device, when the altitude information includes the altitude, may include obtaining an altitude corresponding to the video shooting device by a positioning system; or obtaining the altitude corresponding to the video shooting device according to collected atmospheric pressure; or obtaining the altitude corresponding to the video shooting device according to a collected solar image; or obtaining the altitude corresponding to the video shooting device according to collected gravity data.

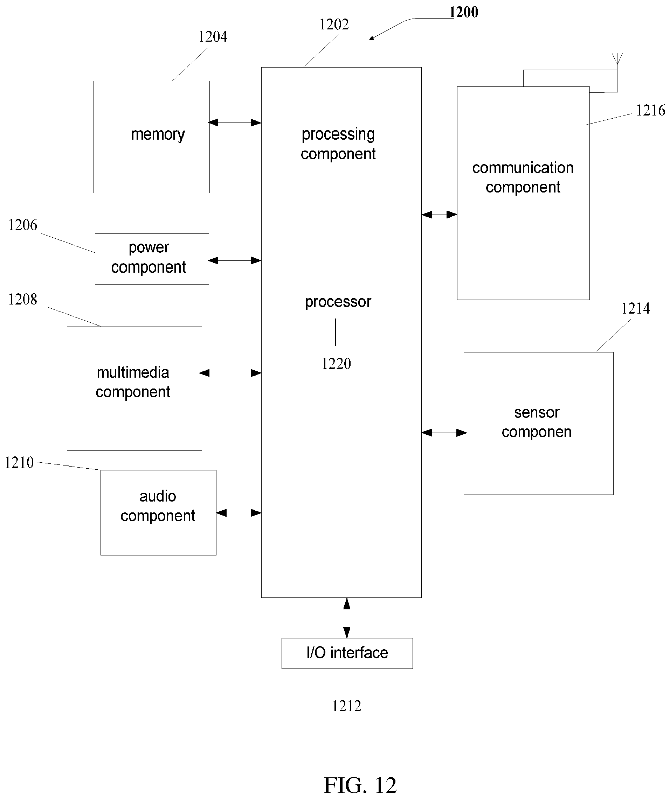

Fig. 12 is a block diagram illustrating an apparatus 1200 for video editing or an apparatus 1200 for video shooting, according to an exemplary embodiment. The apparatus 1200 may be a device with a video editing function, or a device with a video shooting function, such as, a mobile phone, a wearable device, a tablet computer, a digital broadcast terminal, a messaging device, a gaming console, a tablet, a medical device, exercise equipment, a personal digital assistant, and the like.

Referring to Fig. 12, the apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 may typically control overall operations of the apparatus 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 may be configured to store various types of data to support the operation of the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power for the apparatus 1200.

The multimedia component 1208 may include a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum while the apparatus 1200 is in an operation mode, such as a photographing mode or a video mode. Each of the front camera and the rear camera may be a fixed optical lens system or have optical focusing and zooming capability.

The audio component 1210 may be configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, the peripheral interface modules being, for example, a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components (e.g., the display and the keypad, of the apparatus 1200), a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of a nearby object without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 may be configured to facilitate communication, wired or wirelessly, between the apparatus 1200 and other devices. The apparatus 1200 can access a wireless network based on a communication standard, such as WiFi, 2G, or 3G, or a combination thereof. In an exemplary embodiment, the communication component 1216 receives a broadcast signal or broadcast associated information from an external broadcast management system via a broadcast channel. In an exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the apparatus 1200, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided, which having instructions stored thereon. The instructions when executed by the apparatus 1200, cause the apparatus 1200 to perform a method for video editing. The method may include: obtaining a video editing parameter; and editing a video to be edited according to the video editing parameter, wherein the video to be edited is marked with altitude information during a video shooting process.

In one embodiment, editing the video to be edited according to the video editing parameter may include: selecting, according to the video editing parameter, a target video which matches the video editing parameter from the video to be edited; and cutting the target video out from the video to be edited.

In one embodiment, the altitude information may include at least one of an altitude, atmospheric pressure corresponding to the altitude, an aboveground height corresponding to the altitude, a solar image corresponding to the altitude, and gravity data corresponding to the altitude.

In one embodiment, the video editing parameter may include at least one of an altitude, atmospheric pressure corresponding to the altitude, an aboveground height corresponding to the altitude, a solar image corresponding to the altitude, and gravity data corresponding to the altitude.

A non-transitory computer-readable storage medium is provided, which has instructions stored thereon. The instructions when executed by the apparatus 1200, cause the apparatus 1200 to perform a method for video shooting. The method may include: obtaining, during a process for shooting a video, altitude information corresponding to a video shooting device; and marking the video with the altitude information to obtain a video to be edited.

In one embodiment, obtaining, during a process for shooting a video, altitude information corresponding to a video shooting device may include: obtaining, during the process for shooting the video, the altitude information corresponding to the video shooting device in real time; or obtaining, during the process for shooting the video, the altitude information corresponding to the video shooting device according to a preset time interval.

In one embodiment, after obtaining the video to be edited, the method may further include: uploading the video to be edited to a database; or storing the video to be edited locally.

In one embodiment, uploading the video to be edited to the database may include: uploading the video to be edited to the database when a user corresponding to the video to be edited has permission for uploading; or uploading the video to be edited to the database according to an instruction from a terminal device.

In one embodiment, the altitude information may include at least one of an altitude, atmospheric pressure corresponding to the altitude, an aboveground height corresponding to the altitude, a solar image corresponding to the altitude, and gravity data corresponding to the altitude.

In one embodiment, obtaining, during the process for shooting the video, altitude information corresponding to the video shooting device, when the altitude information includes the altitude, may include: obtaining an altitude corresponding to the video shooting device by a positioning system; or obtaining the altitude corresponding to the video shooting device according to collected atmospheric pressure; or obtaining the altitude corresponding to the video shooting device according to a collected solar image; or obtaining the altitude corresponding to the video shooting device according to collected gravity data.

The disclosure may include various example embodiments disclosed below.

In example embodiment 1, a method for video editing may comprise obtaining a video editing parameter; and editing a video to be edited according to the video editing parameter, wherein the video to be edited is marked with altitude information during a video shooting process.

In example embodiment 2, according to the example embodiment 1, wherein editing the video to be edited according to the video editing parameter may comprise selecting, according to the video editing parameter, a target video which matches the video editing parameter from the video to be edited; and cutting the target video out from the video to be edited.

In example embodiment 3, according to the example embodiments 1 or 2, wherein the altitude information may comprise at least one of an altitude, atmospheric pressure corresponding to the altitude, an aboveground height corresponding to the altitude, a solar image corresponding to the altitude, and gravity data corresponding to the altitude.

In example embodiment 4 according to the example embodiments 1 or 2, wherein the video editing parameter may comprise at least one of an altitude, atmospheric pressure corresponding to the altitude, an aboveground height corresponding to the altitude, a solar image corresponding to the altitude, and gravity data corresponding to the altitude.

In example embodiment 5, a method for video shooting may comprise obtaining, during a process for shooting a video, altitude information corresponding to a video shooting device; and marking the video with the altitude information to obtain a video to be edited.

In example embodiment 6, according to the example embodiment 5, wherein obtaining, during a process for shooting a video, altitude information corresponding to a video shooting device may comprise obtaining, during the process for shooting the video, the altitude information corresponding to the video shooting device in real time; or obtaining, during the process for shooting the video, the altitude information corresponding to the video shooting device according to a preset time interval.

In example embodiment 7, after obtaining the video to be edited, the method according to the example embodiment 5 may further comprise uploading the video to be edited to a database; or storing the video to be edited locally.

In example embodiment 8, according to the example embodiment 7, wherein uploading the video to be edited to the database may comprise uploading the video to be edited to the database when a user corresponding to the video to be edited has permission for uploading; or uploading the video to be edited to the database according to an instruction from a terminal device.

In example embodiment 9, according to any of example embodiments 5 to 8, wherein the altitude information may comprise at least one of an altitude, atmospheric pressure corresponding to the altitude, an aboveground height corresponding to the altitude, a solar image corresponding to the altitude, and gravity data corresponding to the altitude.

In example embodiment 10, according to the example embodiment 9, wherein obtaining, during the process for shooting the video, altitude information corresponding to the video shooting device, when the altitude information comprises the altitude, may comprise obtaining an altitude corresponding to the video shooting device by a positioning system; or obtaining the altitude corresponding to the video shooting device according to collected atmospheric pressure; or obtaining the altitude corresponding to the video shooting device according to a collected solar image; or obtaining the altitude corresponding to the video shooting device according to collected gravity data.

In example embodiment 11, an apparatus for video editing may comprise an obtaining module, configured to obtain a video editing parameter; and an editing module, configured to edit a video to be edited according to the video editing parameter, wherein the video to be edited is marked with altitude information during a video shooting process.

In example embodiment 12, according to the example embodiment 11, wherein the editing module may comprise a selection sub-module, configured to select, according to the video editing parameter, a target video which matches the video editing parameter from the video to be edited; and a cutting-out sub-module, configured to cut the target video out from the video to be edited.

In example embodiment 13, according to the example embodiments 11 or 12, wherein the altitude information may comprise at least one of an altitude, atmospheric pressure corresponding to the altitude, an aboveground height corresponding to the altitude, a solar image corresponding to the altitude, and gravity data corresponding to the altitude.

In example embodiment 14, according to the example embodiments 11 or 12, wherein the video editing parameter may comprise at least one of an altitude, atmospheric pressure corresponding to the altitude, an aboveground height corresponding to the altitude, a solar image corresponding to the altitude, and gravity data corresponding to the altitude.

In example embodiment 15, an apparatus for video shooting may comprise an obtaining module, configured to obtain, during a process for shooting a video, altitude information corresponding to a video shooting device; a marking module, configured to mark the video with the altitude information to obtain a video to be edited.

In example embodiment 16, according to the example embodiment 15, wherein the obtaining module may comprise a first obtaining sub-module, configured to obtain , during the process for shooting the video, the altitude information corresponding to the video shooting device in real time; or a second obtaining sub-module, configured to obtain, during the process for shooting the video, the altitude information corresponding to the video shooting device according to a preset time interval.

In example embodiment 17, the apparatus according to the example embodiment 15 may further comprise an uploading module, configured to upload the video to be edited to a database; or a storing module, configured to store the video to be edited locally.

In example embodiment 18, according to the example embodiment 17, wherein the uploading module may comprise a first uploading sub-module, configured to upload the video to be edited to the database when a user corresponding to the video to be edited has permission for uploading; or a second uploading sub-module, configured to upload the video to be edited to the database according to an instruction from a terminal device.

In example embodiment 19, according to the example embodiments 15 to 18, wherein the altitude information may comprise at least one of: an altitude, atmospheric pressure corresponding to the altitude, an aboveground height corresponding to the altitude, a solar image corresponding to the altitude, and gravity data corresponding to the altitude.

In example embodiment 20, according to the example embodiment 19, wherein the obtaining module may comprise a third obtaining sub-module, configured to obtain an altitude corresponding to the video shooting device by a positioning system, when the altitude information comprises the altitude; or a forth obtaining sub-module, configured to obtain the altitude corresponding to the video shooting device according to collected atmospheric pressure, when the altitude information comprises the altitude; or a fifth obtaining sub-module, configured to obtain the altitude corresponding to the video shooting device according to a collected solar image, when the altitude information comprises the altitude; or a sixth obtaining sub-module, configured to obtain the altitude corresponding to the video shooting device according to collected gravity data, when the altitude information comprises the altitude.

In example embodiment 21, an apparatus for video editing may comprise a processor; and a memory for storing instructions executable by the processor; wherein the processor is configured to: obtain a video editing parameter; and edit a video to be edited according to the video editing parameter, wherein the video to be edited is marked with altitude information during a video shooting process.

In example embodiment 22, an apparatus for video shooting may comprise a processor; and a memory for storing instructions executable by the processor; wherein the processor is configured to obtain, during a process for shooting a video, altitude information corresponding to a video shooting device; and mark the video with the altitude information to obtain a video to be edited.

Other embodiments of the disclosure will be apparent to those skilled in the art from consideration of the specification and practice of the disclosures herein. This application is intended to cover any variations, uses, or adaptations of the disclosure following the general principles thereof and including common sense or customary technical means in the art that is not disclosed in the disclosure. It is intended that the specification and examples be considered as exemplary only, with a true scope of the disclosure being indicated by the following claims.

It will be appreciated that the inventive concept is not limited to the exact construction that has been described above and illustrated in the accompanying drawings, and that various modifications and changes can be made without departing from the scope thereof. It is intended that the scope of the disclosure is only limited by the appended claims.

## Claims

1. A method for video editing, **characterized by** comprising:
obtaining (S11) a video editing parameter; and
editing (S12) a video to be edited according to the video editing parameter, wherein the video to be edited is marked with altitude information during a video shooting process.

2. The method of claim 1, wherein editing (S12) the video to be edited according to the video editing parameter comprises:
selecting (S121), according to the video editing parameter, a target video which matches the video editing parameter from the video to be edited; and
cutting (S122) the target video out from the video to be edited.

3. The method of claims 1 or 2, wherein the altitude information comprises at least one of:
an altitude, atmospheric pressure corresponding to the altitude, an aboveground height corresponding to the altitude, a solar image corresponding to the altitude, and gravity data corresponding to the altitude.

4. The method of claims 1 or 2, wherein the video editing parameter comprises at least one of:
an altitude, atmospheric pressure corresponding to the altitude, an aboveground height corresponding to the altitude, a solar image corresponding to the altitude, and gravity data corresponding to the altitude.

5. A method for video shooting, **characterized by** comprising:
obtaining (S31), during a process for shooting a video, altitude information corresponding to a video shooting device; and
marking (S32) the video with the altitude information to obtain a video to be edited.

6. The method of claim 5, wherein obtaining (S31), during a process for shooting a video, altitude information corresponding to a video shooting device comprises:
obtaining (S311), during the process for shooting the video, the altitude information corresponding to the video shooting device in real time; or
obtaining (S312),during the process for shooting the video, the altitude information corresponding to the video shooting device according to a preset time interval.

7. The method of claim 5, after obtaining the video to be edited, the method further comprises:
uploading the video to be edited to a database; or
storing the video to be edited locally.

8. The method of claim 7, wherein uploading the video to be edited to the database comprises:
uploading the video to be edited to the database when a user corresponding to the video to be edited has permission for uploading; or
uploading the video to be edited to the database according to an instruction from a terminal device.

9. The method of any of claims 5 to 8, wherein the altitude information comprises at least one of:
an altitude, atmospheric pressure corresponding to the altitude, an aboveground height corresponding to the altitude, a solar image corresponding to the altitude, and gravity data corresponding to the altitude.

10. The method of claim 9, wherein obtaining, during the process for shooting the video, altitude information corresponding to the video shooting device, when the altitude information comprises the altitude, comprises:
obtaining an altitude corresponding to the video shooting device by a positioning system; or
obtaining the altitude corresponding to the video shooting device according to collected atmospheric pressure; or
obtaining the altitude corresponding to the video shooting device according to a collected solar image; or
obtaining the altitude corresponding to the video shooting device according to collected gravity data.

11. An apparatus for video editing, **characterized by** comprising:
an obtaining module (61), configured to obtain a video editing parameter; and
an editing module (62), configured to edit a video to be edited according to the video editing parameter, wherein the video to be edited is marked with altitude information during a video shooting process.

12. An apparatus for video shooting, **characterized by** comprising:
an obtaining module (81), configured to obtain, during a process for shooting a video, altitude information corresponding to a video shooting device;
a marking module (82), configured to mark the video with the altitude information to obtain a video to be edited.

13. An apparatus for video editing, **characterized by** comprising:
a processor (1220); and
a memory (1204)for storing instructions executable by the processor;
wherein the processor is configured to:
obtain a video editing parameter; and
edit a video to be edited according to the video editing parameter, wherein the video to be edited is marked with altitude information during a video shooting process.

14. An apparatus for video shooting, **characterized by** comprising:
a processor (1220); and
a memory(1204) for storing instructions executable by the processor;
wherein the processor is configured to:
obtain, during a process for shooting a video, altitude information corresponding to a video shooting device; and
mark the video with the altitude information to obtain a video to be edited.

15. A recording medium readable by a computer and having recorded thereon a computer program including instructions for executing the steps of the method according to any of claims 1 to 10.
